(19) Europäisches Patentamt
European Patent Office
Office européen des brevets

(11) EP 1 187 791 B1

(12) EUROPEAN PATENT SPECIFICATION

(45) Date of publication and mention of the grant of the patent: **29.06.2005 Bulletin 2005/26**

(21) Application number: **00920432.2**

(22) Date of filing: **10.02.2000**

(51) Int Cl.[7]: **C01B 17/90**

(86) International application number: **PCT/EP2000/001094**

(87) International publication number: **WO 2000/047518 (17.08.2000 Gazette 2000/33)**

(54) **METHOD FOR NEUTRALISING AND/OR REGENERATING ACID BATHS AND PLANT THAT CARRIES OUT THIS METHOD**

VERFAHREN ZUR NEUTRALISIERUNG UND/ODER REGENERATION SAURER BÄDER UND ANLAGE ZUM DURCHFÜHREN DIESES VERFAHRENS

PROCEDE ET INSTALLATION DE NEUTRALISATION ET/OU DE REGENERATION DE BAINS ACIDES

(84) Designated Contracting States:
**AT BE CH CY DE DK ES FI FR GB GR IE IT LI LU MC NL PT SE**

(30) Priority: **10.02.1999 EP 99102522**

(43) Date of publication of application:
**20.03.2002 Bulletin 2002/12**

(73) Proprietors:
- **Bartolomei, Carlo Alfredo**
  **55036 Pieve a Fosciana (LU) (IT)**
- **Garcia, Fernando H.**
  **7600 Mar Del Plata (AR)**
- **Pieroni, Armando**
  **7600 Mar del Plata (AR)**

(72) Inventors:
- **GARCIA, Fernando H.**
  **7600 Mar Del Plata (AR)**
- **PIERONI, Armando**
  **7600 Mar Del Plata (AR)**

(74) Representative: **Celestino, Marco et al**
**ABM, Agenzia Brevetti & Marchi,**
**Viale Giovanni Pisano, 31**
**56123 Pisa (IT)**

(56) References cited:
**WO-A-86/00288**
**GB-A- 1 406 945**
**US-A- 5 730 950**

- **PATENT ABSTRACTS OF JAPAN vol. 097, no. 012, 25 December 1997 (1997-12-25) & JP 09 206736 A (KURARAY CO LTD), 12 August 1997 (1997-08-12)**
- **PATENT ABSTRACTS OF JAPAN vol. 097, no. 005, 30 May 1997 (1997-05-30) & JP 09 010773 A (KURARAY CO LTD), 14 January 1997 (1997-01-14)**
- **DATABASE WPI Section Ch, Week 8021 Derwent Publications Ltd., London, GB; Class E36, AN 80-37774C XP002104110 & SU 688 427 A (PERM PERMNEFTEORGSI), 30 September 1979 (1979-09-30)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 187 791 B1

Printed by Jouve, 75001 PARIS (FR)

## Description

### Field of the invention

The present invention relates to the inorganic chemistry and the environmental fields and more precisely it relates to a method for exhausted acid baths neutralisation and/or regeneration.
Furthermore, the invention relates to a plant that carries out this method.

### Description of the prior art

It is felt the problem of disposal and/or regeneration of acid baths, such as hydrochloric acid or sulphuric acid baths and sometimes also phosphoric acid and nitric acid baths, used in the industry for example for leather treatment in the tanning field, for pickling in the metallurgical field, for the production of fertilisers and in many other known processes.
Normally, acid baths are progressively polluted by substances are removed during the treatment or by products of reaction and, eventually, are unusable because of suspended dirt and undesired solutes.
US-A-5730950 discloses a process in which a mixture of waste acids comprising $H_2SO_4$ and $HNO_3$ is neutralised with FeO. Subsequently, the precipitated crystals of $FeSO_4$ are filtered and calcined at no more than 725°C. The resulting distillate is passed through water, giving $H_2SO_4$, and the remaining $Fe_2O_3$ is reduced to give FeO which can be recycled in the process. In WO8600288 waste acids comprising $H_2SO_4$ is neutralised with Mg-silicate, resulting in soluble $MgSO_4$ and $SiO_2$ either solid or as gel. In GB-A-1406945 $Fe_2O_3$ is used in a process for isolating pure HCl from a waste liquor comprising HCl and $H_2SO_4$.
The cited processes, however, are expensive and then not preferable, whereby the exhausted baths are normally disposed by companies that neutralise them, through a process which is expensive and generates not recyclable residues. In fact, the regenerated acids have a cost which is sometimes higher than the basic acids used in the process.
Therefore, acceptable regenerating processes require that not complex and easy to carry out chemical reactions are involved so that regenerated acids are available at relatively low cost.
On the other hand, recycling processes would be much more acceptable than regenerating processes if the resulting by-products were obtainable at low cost and were interesting for industrial application.

### Summary of the invention

It is therefore object of the present invention to provide a method for neutralising and/or regenerating exhausted acid baths that is based on not complex and easy to carry out chemical reactions.
It is another object of the present invention to provide a method for neutralising of acid baths that brings about inert products suitable for being used again in the field of the building industry or the like and without that further not recyclable by-products result.
It is a first particular object of the present invention to provide a method for regenerating hydrochloric acid baths that allows to obtain depurated chlorine.
It is a second particular object of the present invention to provide a method for regenerating sulphuric acid baths that allows to obtain sulphuric trioxide and then depurated sulphuric acid.
These and other objects are achieved by the method according to the present invention, whose characteristic is that it comprises the steps of:

- preparing a solution of equivalent ions [H+] having molar concentration set between 4 and 8 starting from an exhausted acid bath, the acid bath comprising at least an acid chosen among HCl, $H_2SO_4$, $H_3PO_4$, $HNO_3$;
- providing a metal oxide chosen among metal oxides capable of forming with the acid baths at least one of the following oxy-salts: oxy-chloride or oxy-sulphate or oxy-phosphate or oxy-nitrate of the metal oxide cation, the mass of the metal oxide being at least enough to cause the ions [$H^+$] of the solution to react completely;
- neutralising the acid solution by adding the metal oxide thus obtaining a mixture containing at least one of said oxy-salts.

Preferably, the metal oxides are chosen among magnesium oxide, zinc oxide.
Always preferably, the acid solution of equivalent ions [H+] is prepared with molar concentration set between 5 and 7 and a particularly preferred equivalent ions [H+] molar concentration is 6.
According to a first embodiment of the invention, to the mixture containing at least one of the oxy-salts a filling inert material is added chosen among milled stone, granite, quartz, corundum, fabric, paper material, as well as saw

dust, talc, sand, asbestos, metal powder, etc. obtaining a mixture that is then cast into moulds and dried thus forming inert blocks.

Preferably, the amount of filler is set between 30% and 70% in volume of the metal oxides. An exceeding amount with respect to the stoichiometric quantity of the metal oxide can also be used as filler.

In a second different embodiment of the invention, the mixture containing at least one of the oxy-salts is directly heated with the presence of a contact catalyst at a temperature set between 700 °C and 1000 °C.

Advantageously, the contact catalyst is formed by inert metal chips with respect to the oxy-salts, such as in particular Hastelloy.

According to a first reaction, the mixture is formed by an oxy-chloride of the metal cation of the metal oxides and then, further to heating, gaseous chlorine $Cl_2$ is freed and then stored in a pressurised container.

Alternatively, the mixture is formed by an oxy-sulphate of the metal cation of the metal oxides and then, further to heating gaseous sulphuric trioxide $SO_3$ is freed that mixed with $H_2O$ makes depurated sulphuric acid.

A plant for carrying out the regeneration method comprises

- a reactor for mixing metal oxides and an acid bath, said reactor containing a contact catalyst;
- an oven and a conveyor for carrying the reactor through the oven;
- means for collecting the gases freed by said reactor in said oven.

Brief description of the drawings

Further characteristics and/or advantages of the method and of the plant according to the present invention will be made clearer with the following description of an embodiment thereof, exemplifying but not limitative, with reference to attached drawings wherein:

- figure 1 shows a diagrammatical elevational view of a plant according to the invention for neutralising acid baths;
- figure 2 shows a diagrammatical top plan view of a plant according to the invention for regenerating acid baths.

Furthermore, the method according to the invention will be made clearer with the not limitative examples given hereinafter.

Description of preferred embodiments

A method according to the present invention for neutralising and/or regenerating acid baths, such as exhausted baths, is based on the reaction among at least a metal oxide and an acid solution with the production of an oxy-salt, water and heat. Said oxy-salt can be anhydrous or hydrate, according to the amount of water of crystallisation present, and comes from the reaction among the cations of the oxide and the anions of the acid of the solution. The chemical-physical characteristics of the final product depend from the number of water molecules present in the crystalline lattice.

The general formula of the reaction, in the case of mono-protic acids, is the following:

$$2MO + 2HA \xrightarrow{xH_2O} M_2A_2O \cdot xH_2O + H_2O$$

wherein *M* is the cation of the oxide, A is the anion of the acid and *x=1...n* is the number of hydratation molecules of the salt.

The metal oxides that are used in the process are those that can form oxy-salts after reaction with the anions present in the acid solution, such as for example zinc oxide or magnesium oxide, that form oxy-chlorides and oxy-sulphates after reaction with hydrochloric acid (HCl) and sulphuric acid ($H_2SO_4$) respectively.

The acidity of the solutions is crucial because it affects the reaction speed, the workability and the physical characteristics of the final product. Experimentally the best results turned out with ions $[H^+]$ molar concentration set among 4 and 8. By using acid solutions with a different concentration of $[H^+]$ a mixtures re obtained that are suitable for the production of plastering or paint.

A preferred reaction for a mono-protic acid provides the use of magnesium oxide and hydrochloric acid thus obtaining anhydrous magnesium oxy-chloride, under the reaction:

$$2MgO + 2HCl \rightarrow Mg_2Cl_2O + H_2O.$$

In the case, instead, of bi-protic acid, using the same symbols, the general formula of the reaction is the following:

$$2MO + H_2A \xrightarrow{xH_2O} M_2AO \cdot xH_2O + H_2O \,.$$

Another preferred reaction, in this case of a bi-protic acid, provides the use of zinc oxide and sulphuric acid thus obtaining anhydrous zinc oxy-sulphate, according to the reaction

$$2ZnO + H_2SO_4 \rightarrow Zn_2(SO_4)O + H_2O.$$

In all the cases provided for by the two above general formulas, and in the two particular reactions considered, an oxy-salt is obtained that is completely inert and can have, after casting and drying, good mechanical resistance both to bending stress and to compressive stress, being then suitable for the building industry.

A peculiar characteristic of the product is the capability of not to release the pollutants that are present in said exhausted acid solutions. These solutions, in fact, come from exhausted acid baths used in the metallurgical or chemical industry, containing also dirt formed by metal residues, solvents, sand and other polluting agents.

In the neutralisation method according to the present invention, the dirt and pollutants are dispersed in the crystalline lattice of the oxy-salt and this way they are neutralised and can be exploited further.

With reference to figure 1, the general diagrammatical view of a plant that carries out the neutralising process comprises a reactor 1 capable of receiving metal oxides 2a from a mixer 2, an inert filler 3a from a mixer 3, the suitably concentrated or diluted exhausted acid bath 4a from a mixer 4. Furthermore, it comprises a scrubber 7 in which, by means of a pump 8, an alkaline solution recirculates based on soda or calcium hydroxide. Then an inertial separator 9 is provided dividing the liquid phase from the gaseous phase coming from the reactor through a duct 6 and sending it into respective recirculation ducts 10 and 11 of the two phases back towards reactor 1 and towards scrubber 7.

Under reactor 1 a continuous conveyor 12 is provided carrying moulds 5 in which the mixture 1a produced in the reactor 1 is cast for making inert blocks 5a suitable for being recycled in the building field or for disposal.

In more detail, the process for neutralising acid solutions comprises the preliminary step of preparing an acid solution 4a with a 4-8 molar concentration of [$H^+$] ions, preferably about 6 molar, starting from exhausted acid baths that contain at least one of the following acids: HCl, $H_2SO_4$, $H_3PO_4$, $HNO_3$.

Said step is carried out typically in mixer 4 that has the function of homogenising the acid 4a, or the acids mixture, prior to the reaction. In this preliminary step the addition of water in case of too concentrated solutions, or a concentration in case of too much diluted solutions is provided.

In the meantime, in mixer 2 a metal oxide 2a, or a mixture of metal oxides, is prepared, chosen among those metal oxides capable of forming, with the anions contained in the acid baths, at least one of the following oxy-salts: oxy-chloride, oxy-sulphate, oxy-phosphate or oxy-nitrate of the respective cations of the metal oxides used. An amount of metal oxide is chosen so that the cations in it contained completely react with the ions [$H^+$] of the acid solution. Advantageously, MgO or ZnO may be used.

Mixing in reactor 1 the acid solution 4a with metal oxide 2a a mixture 1a is formed containing at least one of said oxy-salts. For example, with the hydrochloric acid zinc oxy-chloride or magnesium oxy-chloride is obtained, whereas with sulphuric acid zinc oxy-sulphate or magnesium oxy-sulphate is obtained.

Since the neutralisation is a strongly exothermic reaction, in reactor 1 a heat production occurs that causes vaporisation of part of the acid solution supplied to the reactor. The vapour entrains droplets of solution that reaches, through duct 6, inertial separator 9. In it, the droplets are separated from the gas phase and sent back to reactor 1 through duct 10, whereas the acid gas is sent to scrubber 7 through duct 11 in which, by means of pump 8, the alkaline solution based on soda or calcium hydroxide recirculates. The depurated gas 7a is then freed in atmosphere.

In a first embodiment, the process provides the possibility of adding, along with metal oxide 2a, also a filler 3a made of inert material that can affect some characteristics of the final product such as the physical aspect, the density, the colour, the brightness, the mechanical resistance etc. The filler 3a can be for example milled stone, granite, quartz, asbestos, corundum, as well as saw dust, talc, sand, fabric, metal powder, paper material, etc.

The amount of inert filler 3a depends on the desired final product and experimentally good chemical-physical characteristics turned out with a bulk ratio between oxides+acid and filler comprised between 30% and 70%, preferably about 50% each.

The addition of filler 3a causes mixture 1a to become creamy and homogenised by reactor 1, then it is cast into moulds 5, of metal, silicone or plastics, for the production of blocks desired dimension.

The moulds 5 are carried by conveyor 12 and are dried naturally, obtaining blocks 5a. The time necessary for this step depends from the water percentage of the mixture and from temperature, pressure and humidity of the

environment. The inert product has the shape of the moulds, for example tiles, bricks, etc.

In a second embodiment of the process, the same reaction that is carried out in reactor 1 for forming the mixture 1a of oxy-salts according to the invention can be used without addition of filler 3a thus producing chlorine, $SO_3$ or other industrially useful gas.

In fact starting from an oxide and from an acid a resulting oxy-salt can react, in particular conditions and with the aid of a catalyst, and then produce the starting metal oxide and a gas.

Two exemplifying cases are the following. The first relates to an oxy-chloride that reacting with oxygen produces gaseous chlorine and an oxide. The second relates an oxy-sulphate that can thermally dissociate into $SO_3$ and an oxide, or react with oxygen and carbon for delivering carbon dioxide, sulphur dioxide and an oxide.

These reactions occur at about 700-1000 °C of temperature, for example 850°, at atmospheric pressure and using a heterogeneous catalyst, for example metal chips, in metal powder or wire net. In particular some experiments have shown that Hastelloy is a catalyst suitable for such reactions.

The reactions considered above have the following formula:

$$M_2OCl_2+\frac{1}{2}O_2 \rightarrow 2MO+Cl_2$$

$$M_2(SO_4)O \rightarrow 2MO+SO_3$$

$$M_2(SO_4)O+\frac{1}{2}O_2+C \rightarrow 2MO+CO_2+SO_2.$$

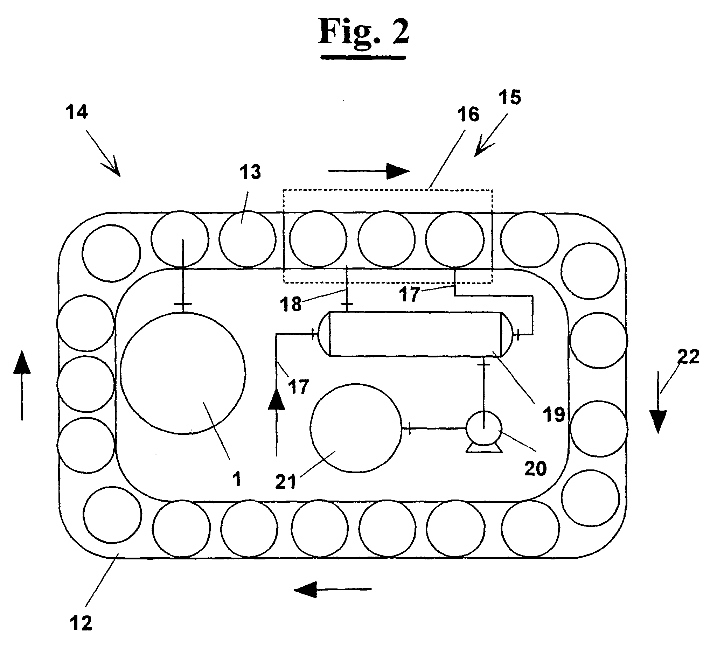

With reference to figure 2, a preferred embodiment of the process for the production of industrially useful gas from exhausted acid solutions, according to the present invention, is based on the steps of pouring into vessels 13 the oxy-salt 1a of figure 1, but without that filler 3a is added to it. Vessels 13 are carried by continuous conveyor 12 towards a first reaction zone 14.

Alternatively, the acid solution 4a is poured into vessels 13 containing already a metal oxide, and the reaction forming the oxy-salt occurs directly in vessels 13. Vessels 13 that reach zone 14 previously contain a catalyst, for example chips of Hastelloy.

Vessels 13 are then carried through a heating zone 15 that comprises an oven 16 sized for heating them up to a reaction temperature set between 700° and 1000°, such as 850°.

In case of production of gaseous chlorine ($Cl_2$), a system of ducts 17 supplies oxygen, whereas through duct 18 chlorine is extracted and sent to gas/gas exchanger 19 that has the function of recovering heat from the chlorine produced and of pre-heating the oxygen entering oven 16. The cooled chlorine is supplied to compressor 20 and then stored in pressurised reservoir 21.

The vessels coming from oven 16 contain only the catalyst and the metal oxide that can react again with the acid solution 4a when the vessels reach zone 14 carried by conveyor 12 in the direction of arrow 22. In this case, there is high efficiency and not too many reaction residues.

Alternatively to chlorine, starting from $H_2SO_4$ acid baths it is possible to make $SO_3$ or other gas according to the type of acid bath being regenerated.

Examples

The following are several examples of the first embodiment of the process for neutralising exhausted acid baths, with reference to the quantity of reagents actually used.

a) 1000 kg of a HCl solution with hydrogen ions concentration $[H^+]$=6M/l have been neutralised with 219 kg of MgO, of standard purity, obtaining 370 kg of oxy-chloride of Magnesium to which 374 kg of quartz in powder have been added.

The mixture obtained, after appropriate mixing, has been cast in silicone moulds obtaining blocks that solidified after natural drying in 12 hours, with the environmental conditions of 22°C, and relative humidity at 80%.

b) 1000 kg of a $H_2SO_4$ solution with hydrogen ions concentration $[H^+]$=6M/l have been neutralised with 185 kg of ZnO, of standard purity, obtaining 369 kg of Zn oxy-sulphate to which 400 kg of metal powder have been added.

The mixture obtained, after appropriate mixing, has been cast in plastic moulds obtaining blocks that solidified after natural drying in 6 hours, with the environmental conditions of 30°C, and relative humidity at 80%.

c)1000 kg of a solution of HCl and $H_2SO_4$, mixed in 50% ratio, with hydrogen ions concentration $[H^+]$=6M/l have

been neutralised with 200 kg of MgO, with standard purity, obtaining 185 kg of Mg oxy-chloride and 185 kg of Mg oxy-sulphate to which 100 kg of filler of powdered paper pulp have been added.

The mixture obtained, after appropriate mixing, has been cast into silicone moulds obtaining blocks that solidified after natural drying in 12 hours, with environmental conditions of 22°C, and relative humidity at 80%.
In the above examples, the blocks obtained through the described process are completely inert from the chemical point of view and have good mechanical resistance both to bending stress and to compressive stress, resulting then suitable for the building industry.

Concerning, instead, the process according to fig. 2, the following are two examples of the second embodiment of the process for regenerating exhausted acid baths, with reference to the quantity of reagents actually used.
d) 1000 kg of a HCl solution with hydrogen ions concentration $[H^+]$=6M/l have been neutralised with 444 kg of ZnO, of standard purity, obtaining 594 kg of Zn oxy-chloride. The mixture thus obtained has been poured in vessels containing Hastelloy chips, which act as heterogeneous catalyst, and put into an oven heated at the temperature of 850°C. In such conditions the production of gaseous $Cl_2$ occurs that can be cooled and then stored as liquid chlorine.
e) 1000 kg of a $H_2SO_4$ solution with hydrogen ions concentration $[H^+]$=6M/l have been neutralised with 185 kg of MgO, of standard purity, obtaining 369 kg of Zn oxy-chloride. The mixture obtained has been poured into vessels containing Hastelloy chips, which acts as heterogeneous catalyst, and put into an oven heated up to temperature of 850°C. In such conditions gaseous $SO_3$ is delivered that has been cooled and absorbed in water for making purified sulphuric acid ($H_2SO_4$).

## Claims

**1.** Method for neutralising and/or regenerating acid baths comprising the steps of:

- preparing an acid solution with a molar concentration per litre of ions $[H^+]$ set between 4 and 8, starting from an acid bath, said acid bath comprising at least an acid chosen among HCl, $H_2SO_4$, $H_3PO_4$, $HNO_3$;
- providing a metal oxide chosen among metal oxides capable of forming with the anions contained in said acid baths at least one of the following oxy-salts: oxy-chloride or oxy-sulphate or oxy-phosphate or oxy-nitrate of the cation of said metal oxide, the mass of said metal oxide being at least enough to cause the ions $[H^+]$ of said solution to react completely;
- neutralising said solution by adding to it said metal oxide thus obtaining a mixture containing at least one of said oxy-salts.

**2.** Method according to claim 1, wherein said metal oxides are chosen among magnesium oxide, zinc oxide.

**3.** Method according to claim 1, wherein said acid solution is prepared with a molar concentration per litre of $[H^+]$ set between 5 and 7.

**4.** Method according to the previous claims, wherein to said mixture containing at least one of said oxy-salts a filler is added chosen among milled stone, granite, quartz, corundum, asbestos, saw dust, talc, sand, fabric, metal powder, paper material, obtaining a mixture that is then cast into moulds and dried as inert blocks.

**5.** Method according to claim 4, wherein the added amount of said filling material is set between 30% and 70% in volume with respect to said metal oxides.

**6.** Method according to claim 1, wherein said mixture containing at least one of said oxy-salts is directly heated with the presence of a heterogeneous contact catalyst at a temperature set between 700 °C and 1000 °C.

**7.** Method according to claim 6, wherein said contact catalyst is formed by solids having high thermal capacity and inert with respect to said oxy-salts having a large contact surface, such as metal chips, powdered metal, wire net.

**8.** Method according to claim 1, wherein said mixture is formed by an oxy-chloride of the metal cation of said metal oxides, further to said heating, gaseous chlorine ($Cl_2$) being freed which is stored in a pressurised container.

**9.** Method according to claim 1, wherein said mixture is formed by an oxy-sulphate of the metal cation of said metal oxides, further to said heating $SO_3$ being produced then absorbed in water ($H_2O$) to form depurated sulphuric acid ($H_2SO_4$).

10. Plant carrying out the method according to the previous claims for regenerating exhausted acid baths, comprising:

- a reactor for mixing metal oxides and an acid bath,
- an oven
- a conveyor for carrying the reactor through the oven;

**characterised in that** said reactor contains a contact catalyst and means for collecting and storing the gases freed by said reactor in said oven.

**Patentansprüche**

1. Verfahren zum Neutralisieren und/oder Regenerieren von Säurebädern, das folgende Schritte umfasst:

- Herstellen einer Säurelösung mit einer molaren [$H^+$]-Ionenkonzentration pro Liter, die zwischen 4 und 8 eingestellt ist, ausgehend von einem Säurebad, wobei dieses Säurebad wenigstens eine Säure umfasst, die aus HCl, $H_2SO_4$, $H_3PO_4$ und $HNO_3$ ausgewählt ist;

- Bereitstellen eines Metalloxids, das unter Metalloxiden ausgewählt ist, die in der Lage sind, mit den in den Säurebädern enthaltenen Anionen wenigstens eines der folgenden Oxysalze zu bilden: Oxychlorid oder Oxysulfat oder Oxyphosphat oder Oxynitrat des Kations des Metalloxids, wobei die Masse dieses Metalloxids wenigstens ausreicht, um zu veranlassen, dass die Ionen [$H^+$] der Lösung vollständig reagieren;

- Neutralisieren der Lösung durch Beigabe des Metalloxids zu der Lösung, wodurch eine Mischung erhalten wird, die wenigstens eines der Oxysalze enthält.

2. Verfahren nach Anspruch 1, wobei die Metalloxide unter Magnesiumoxid und Zinkoxid ausgewählt sind.

3. Verfahren nach Anspruch 1, wobei die Säurelösung mit einer molaren [$H^+$]-Konzentration pro Liter, die zwischen 5 und 7 eingestellt ist, hergestellt wird.

4. Verfahren nach den vorangehenden Ansprüchen, wobei zu der Mischung, die wenigstens eines der Oxysalze enthält, ein Füllstoff beigegeben wird, der ausgewählt ist unter: gemahlenem Stein, Granit, Quarz, Korund, Asbest, Sägemehl, Talkum, Sand, Textilmaterial, Metallpulver, Papiermaterial, wodurch eine Mischung erhalten wird, die anschließend in Formen gegossen und als inerte Blöcke getrocknet wird.

5. Verfahren nach Anspruch 4, wobei die beigegebene Menge des Füllstoffs zwischen 30 und 70 Vol.-% im Verhältnis zu den Metalloxiden eingestellt wird.

6. Verfahren nach Anspruch 1, wobei die Mischung, die wenigstens eines der Oxysalze enthält, direkt in Gegenwart eines heterogenen Kontaktkatalysators bei einer Temperatur, die zwischen 700 °C und 1000 °C eingestellt ist, erwärmt wird.

7. Verfahren nach Anspruch 6, wobei der Kontaktkatalysator durch Feststoffe gebildet wird, die eine hohe thermische Kapazität aufweisen und gegenüber den Oxysalzen inert sind und eine große Kontaktfläche aufweisen, wie beispielsweise Metallspäne, Metallpulver oder Maschendraht.

8. Verfahren nach Anspruch 1, wobei die Mischung durch ein Oxychlorid des Metallkations der Metalloxide gebildet wird und wobei des Weiteren im Zusammenhang mit dem Erwärmen Chlorgas ($Cl_2$) freigesetzt wird, das in einem Druckbehälter gespeichert wird.

9. Verfahren nach Anspruch 1, wobei die Mischung durch ein Oxysulfat des Metallkations der Metalloxide gebildet wird und wobei des Weiteren im Zusammenhang mit dem Erwärmen $SO_3$ entsteht, das dann in Wasser ($H_2O$) absorbiert wird, so dass gereinigte Schwefelsäure ($H_2SO_4$) entsteht.

10. Anlage zum Durchführen des Verfahrens nach den vorangehenden Ansprüchen zum Regenerieren erschöpfter Säurebäder, umfassend:

- einen Reaktor zum Vermischen von Metalloxiden und eines Säurebades;
- einen Ofen;
- eine Transporteinrichtung, die den Reaktor durch den Ofen befördert;

**dadurch gekennzeichnet, dass** der Reaktor einen Kontaktkatalysator sowie Mittel zum Auffangen und Speichern der Gase, die durch den Reaktor in dem Ofen freigesetzt werden, beinhaltet.

## Revendications

**1.** Procédé de neutralisation et/ou de régénération de bains acides comprenant les étapes consistant à :

- préparer une solution acide ayant une concentration molaire d'ions $[H^+]$ par litre fixée entre 4 et 8, à partir d'un bain acide, ledit bain acide comprenant au moins un acide choisi parmi HCl, $H_2SO_4$, $H_3PO_4$, $HNO_3$ ;
- se munir d'un oxyde métallique choisi parmi les oxydes métalliques capables de former avec les anions contenus dans lesdits bains acides au moins un des oxy-sels suivants : un oxy-chlorure ou un oxy-sulfate ou un oxy-phosphate ou un oxy-nitrate du cation dudit oxyde métallique, la masse dudit oxyde métallique étant au moins suffisante pour provoquer une réaction complète des ions $[H^+]$ dans ladite solution ;
- neutraliser ladite solution en y ajoutant ledit oxyde métallique afin d'obtenir un mélange contenant l'un au moins desdits oxy-sels.

**2.** Procédé selon la revendication 1, dans lequel lesdits oxydes métalliques sont choisis parmi l'oxyde de magnésium et l'oxyde de zinc.

**3.** Procédé selon la revendication 1, dans lequel ladite solution acide est préparée avec une concentration molaire par litre de $[H^+]$ fixée entre 5 et 7.

**4.** Procédé selon les revendications précédentes, dans lequel, audit mélange contenant au moins un desdits oxy-sels, on ajoute une charge choisie parmi une pierre broyée, le granite, le quartz, le corindon, l'amiante, la sciure de bois, le talc, le sable, un tissu, une poudre métallique, le papier, pour obtenir un mélange que l'on coule ensuite dans des moules et que l'on sèche sous forme de blocs inertes.

**5.** Procédé selon la revendication 4, dans lequel la quantité ajoutée de ladite charge est fixée entre 30 % et 70 % en volume par rapport auxdits oxydes métalliques.

**6.** Procédé selon la revendication 1, dans lequel ledit mélange contenant l'un au moins desdits oxy-sels est directement chauffé en présence d'un catalyseur de contact hétérogène à une température fixée entre 700°C et 1000°C.

**7.** Procédé selon la revendication 6, dans lequel ledit catalyseur de contact est formé de matières solides ayant une grande capacité calorifique et inertes vis-à-vis desdits oxy-sels ayant une grande surface de contact, tels que les copeaux métalliques, un métal pulvérulent, une maille métallique.

**8.** Procédé selon la revendication 1, dans lequel ledit mélange est formé par un oxy-chlorure du cation métallique desdits oxydes métalliques, après ledit chauffage, du chlore gazeux ($Cl_2$) étant libéré, qui est stocké dans un récipient sous pression.

**9.** Procédé selon la revendication 1, dans lequel ledit mélange est formé par un oxy-sulfate du cation métallique desdits oxydes métalliques, après ledit chauffage, du $SO_3$ étant produit, puis absorbé dans de l'eau ($H_2O$) pour former de l'acide sulfurique dépuré ($H_2SO_4$).

**10.** Dispositif de mise en oeuvre du procédé selon les revendications précédentes pour régénérer des bains acides usés, comprenant :

- un réacteur pour mélanger des oxydes métalliques et un bain acide,
- un four,
- un transporteur pour transporter le réacteur à travers le four ;

**caractérisée en ce que** ledit réacteur contient un catalyseur de contact et des moyens pour recueillir et stocker les gaz déchargés dudit réacteur dans ledit four.

# Fig. 1

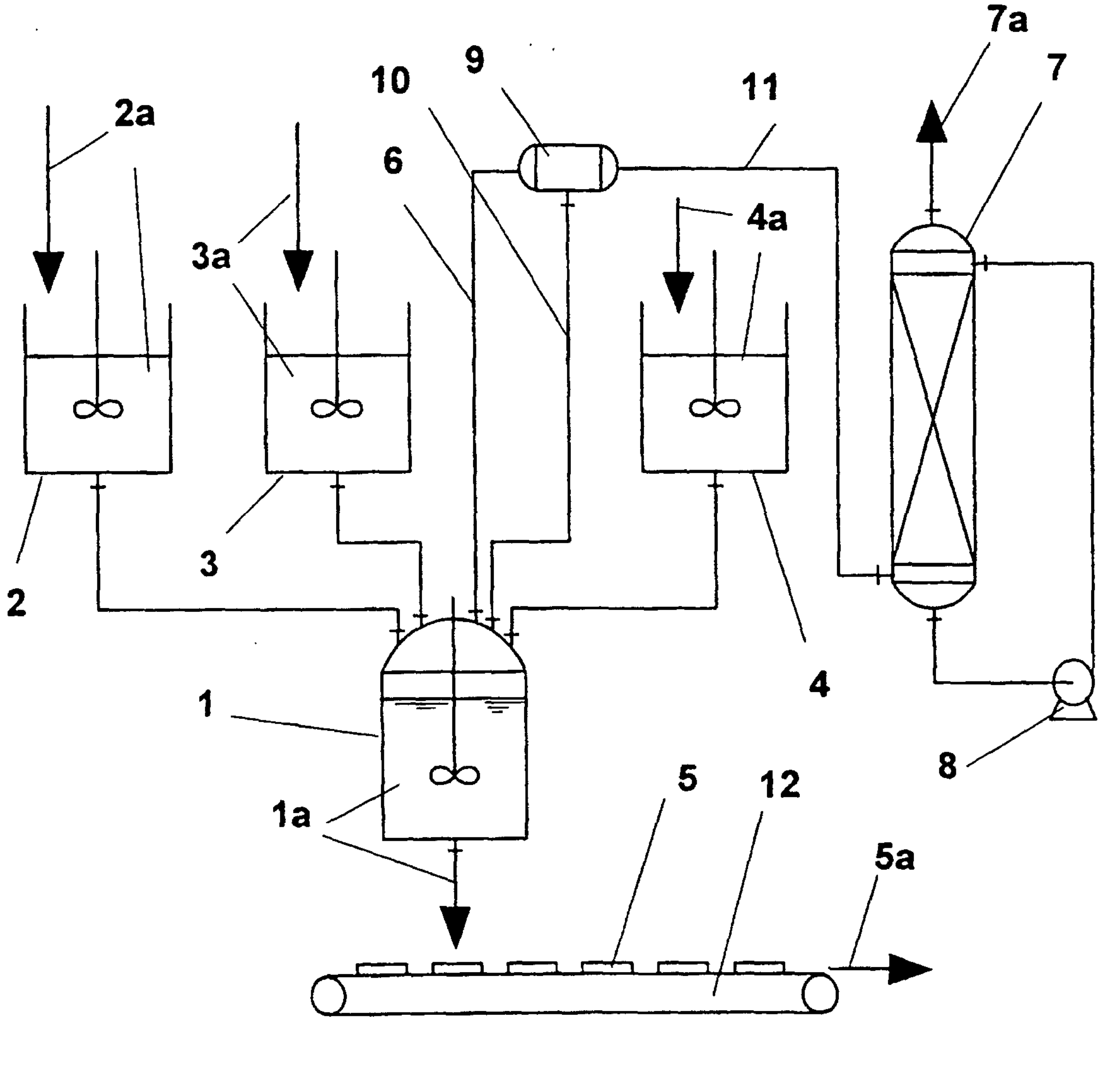

# Fig. 2